# EUROPEAN PATENT APPLICATION

(11) **EP 4 787 582 A1**
(43) Date of publication of application: **05.08.2026**
(21) Application number: 24870030.4
(22) Date of filing: 22.07.2024
(51) Int. Cl.: H01M 50/296, H01M 50/244, H01M 50/204

(54) **ENERGY STORAGE APPARATUS AND ENERGY STORAGE SYSTEM**

(30) Priority: 27.09.2023 CN 202322634271 U
(71) Applicant: Contemporary Amperex Technology Co., Limited, Ningde, Fujian 352100 (CN)
(72) Inventor: WU, Kai, Ningde, Fujian 352100 (CN); WANG, Longxing, Ningde, Fujian 352100 (CN); ZHOU, Yuan, Ningde, Fujian 352100 (CN)
(74) Representative: Lorenz Seidler Gossel Part. mbB
(86) International application number: PCT/CN2024/106709
(87) International publication number: WO 2025/066475

(57) **Abstract**

An energy storage apparatus and an energy storage system are provided. The energy storage apparatus includes a box (11), a functional component, and a battery (22). The box (11) includes a battery compartment (111) and a functional compartment (112), where at least a portion of the functional compartment (112) is located above the battery compartment (111) along a gravitational direction; the battery (22) is accommodated in the battery compartment (111); and the functional component is accommodated in the functional compartment (112) and is at least partially located above the battery (22). The energy storage apparatus facilitates temperature uniformity of batteries (22) in the battery compartment (111), thereby enhancing reliability of the energy storage apparatus. Additionally, alleviated temperature rise of a battery (22) at a top inside the battery compartment (111) helps to prolong a service life of the battery (22) near the top of the battery compartment (111), thereby helping to prolong a service life of the energy storage apparatus.

## Description

### CROSS-REFERENCE TO RELATED APPLICATIONS

This application claims priority to Chinese Patent Application No. 202322634271.X, filed on September 27, 2023 and entitled "ENERGY STORAGE APPARATUS AND ENERGY STORAGE SYSTEM", which is incorporated herein by reference in its entirety.

### TECHNICAL FIELD

This application relates to the field of energy storage technology, and in particular, to an energy storage apparatus and an energy storage system.

### BACKGROUND

With the rapid development of technologies, electrical energy has become an indispensable energy source in people's daily life and production. To enhance the reliability of electrical energy supply and ensure the normal operation of production and daily activities, energy storage apparatuses are required. An energy storage apparatus is apparatus for storing electrical energy. Through charge or discharge of the energy storage apparatus, electrical energy is stored in the energy storage apparatus, or the energy storage apparatus supplies stored electrical energy to an electrical apparatus. Energy storage apparatuses are widely used in fields such as industrial power supply, household power supply, temporary power supply, mobile power supply, wind power generation, solar power generation, and energy storage power stations.

In the development of energy storage apparatuses, in addition to improving performance of the apparatuses, enhancing the reliability of the apparatuses is also a critical issue. Therefore, improving the reliability of energy storage apparatuses remains an ongoing technical challenge in energy storage technology.

### SUMMARY

This application provides an energy storage apparatus and an energy storage system, so that reliability of the energy storage apparatus can be improved.

According to a first aspect, an embodiment of this application provides an energy storage apparatus, including a box, a functional component and a battery. The box includes a battery compartment and a functional compartment, where at least a portion of the functional compartment is located above the battery compartment along a gravitational direction; the battery is accommodated in the battery compartment; and the functional component is accommodated in the functional compartment and at least partially located above the battery.

In the energy storage apparatus provided in the embodiment of this application, at least a portion of the functional compartment of the box is located above the battery compartment along the gravitational direction and at least a portion of the functional component is located above the battery. When the energy storage apparatus is exposed to direct sunlight, this configuration helps to alleviate the temperature rise of the battery near the top of the battery compartment along the gravitational direction, thereby improving temperature uniformity of batteries within the battery compartment. This is conducive to enhancing the reliability of the energy storage apparatus. Additionally, due to the alleviated temperature rise of the battery at the top of the battery compartment, a service life of the battery near the top of the battery compartment is prolonged, thereby helping to prolong a service life of the energy storage apparatus.

In some embodiments, the functional component includes a high-voltage connector, the high-voltage connector is electrically connected to the battery, the functional compartment includes the first electrical compartment, the first electrical compartment is located above the battery compartment along the gravitational direction, and the high-voltage connector is accommodated in the first electrical compartment. This facilitates the connection between the high-voltage connector and the battery in the battery compartment, helping to simplify a connection circuitry of the battery.

In some embodiments, the functional compartment includes a first electrical compartment, the first electrical compartment is located above the battery compartment along the gravitational direction, the functional component includes a primary control component, and the primary control component is electrically connected to the battery and located in the first electrical compartment. This facilitates the electrical connection between the battery and the primary control component.

In some embodiments, the energy storage apparatus includes a plurality of primary control components and a plurality of battery clusters, each battery cluster includes a plurality of electrically connected batteries arranged along the gravitational direction, and the primary control components are electrically connected to the battery clusters in a one-to-one correspondence. This helps to control a corresponding battery cluster through the primary control component and enables separate control of the batteries. During abnormal operation of some batteries, only the corresponding battery cluster needs to be controlled to stop operation, without affecting the normal operation of another battery cluster. This helps to further improve the reliability and prolong the service life of the energy storage apparatus.

In some embodiments, the functional compartment further includes a second electrical compartment, the second electrical compartment is disposed on a side of the battery compartment along a first direction, the first direction and the gravitational direction intersect, the functional component further includes a general control component, the general control component is accommodated in the second electrical compartment, and the general control component is configured to electrically connect to the primary control component. This facilitates simplification of the connection circuitry between the energy storage apparatus and an external power source or electrical apparatus while improving the reliability and prolonging the service life of the energy storage apparatus, and facilitates simplification of internal connection circuitry of the energy storage apparatus.

In some embodiments, the energy storage apparatus further includes a humidity regulation unit. The humidity regulation unit is configured to control humidity within the first electrical compartment. This helps to reduce the risk of condensation forming in the first electrical compartment and reduce the risk of condensation dripping onto the high-voltage connector, which could cause a short circuit of the high-voltage connector or deteriorate insulation performance of the high-voltage connector, thereby helping to improve safety of the energy storage apparatus.

In some embodiments, the humidity regulation unit is located on a side of the first electrical compartment along the first direction, the first direction and the gravitational direction intersect, and a space where the humidity regulation unit is located is in communication with the functional compartment located above the battery. This configuration facilitates the humidity regulation unit in adjusting humidity of the functional compartment above the battery.

In some embodiments, the energy storage apparatus further includes a temperature regulation unit, the temperature regulation unit is configured to control a temperature within the first electrical compartment. This facilitates better control of the humidity within the first electrical compartment, further reducing the risk of condensation forming in the first electrical compartment, and helping to further improve the safety of the energy storage apparatus.

In some embodiments, the temperature regulation unit is located on the side of the first electrical compartment along the first direction, the first direction and the gravitational direction intersect, and a space where the temperature regulation unit is located is in communication with the functional compartment located above the battery. This helps to improve the efficiency of the temperature regulation unit in controlling the temperature of the first electrical compartment.

In some embodiments, the energy storage apparatus further includes a separator, the separator is disposed between the battery compartment and the first electrical compartment, the separator has a first flow channel, and the first flow channel is configured for fluid flow to implement heat exchange with the separator. This enables the separator to simultaneously cool or heat the battery and components such as the high-voltage connector in the first electrical compartment, facilitating the normal operation of the energy storage apparatus.

In some embodiments, the functional compartment further includes a fluid supply compartment, the fluid supply compartment is disposed on a side of the battery compartment along a first direction, the first direction and the gravitational direction intersect, the functional component further includes a fluid supply component, and the fluid supply component is disposed in the fluid supply compartment and in communication with the first flow channel to supply fluid to the first flow channel. This helps to further reduce the risk of non-uniform temperatures among the batteries in the battery compartment, thereby improving the reliability of the energy storage apparatus.

In some embodiments, the battery includes: a battery module including a plurality of electrically connected battery cells; and a heat exchanger disposed on a side of the battery module facing away from the separator, where the heat exchanger has a second flow channel, and the second flow channel is configured for fluid flow to implement heat exchange with the battery module. The battery module undergoes heat exchange with the heat exchangers on two sides along the gravitational direction, resulting in a relatively uniform temperature field for the batteries arranged along the gravitational direction, helping to further improve the temperature uniformity of the batteries and prolong the service life of the energy storage apparatus.

In some embodiments, the fluid supply component is further in communication with the second flow channel to supply fluid to the second flow channel. This configuration facilitates simplification of the structure and space utilization of the energy storage apparatus.

According to a second aspect, an embodiment of this application provides an energy storage system including the energy storage apparatus provided in any of the foregoing embodiments.

With the energy storage apparatus provided in any of the embodiments described above, the energy storage system provided by the embodiments of this application achieves the same technical effects. Details are not repeated herein.

### BRIEF DESCRIPTION OF DRAWINGS

To more clearly illustrate the technical solutions of the embodiments of this application, the drawings required for the embodiments of this application are briefly introduced below. It is clear that the drawings described below are merely some embodiments of this application, and persons of ordinary skill in the art can obtain other drawings based on these drawings without creative efforts.
FIG. 1 is a schematic structural diagram of an energy storage system according to an embodiment of this application;
FIG. 2 is a schematic structural diagram of a battery cluster in an energy storage apparatus according to an embodiment of this application;
FIG. 3 is a schematic exploded view of a battery cell in an energy storage apparatus according to an embodiment of this application;
FIG. 4 is a schematic structural diagram of an energy storage apparatus according to an embodiment of this application;
FIG. 5 is a schematic structural diagram of another energy storage apparatus according to an embodiment of this application;
FIG. 6 is a schematic structural diagram of yet another energy storage apparatus according to an embodiment of this application;
FIG. 7 is a schematic structural diagram of still another energy storage apparatus according to an embodiment of this application; and
FIG. 8 is a schematic diagram of a partial structure of an energy storage apparatus according to an embodiment of this application.

In the drawings, the drawings are not drawn to actual scale.

### Description of reference signs:

1. energy storage system; 10. energy storage apparatus; 11. box; 111. battery compartment; 1111. battery sub-compartment; 112. functional compartment; 112a. first electrical compartment; 112b. second electrical compartment; 112c. fluid supply compartment; 12. high-voltage connector; 13. primary control component; 14. general control component; 15. humidity regulation unit; 16. temperature regulation unit; 17. separator; 18. fluid supply component; 20. battery cluster; 22. battery; 221. battery module; 222. heat exchanger; 30. battery cell; 31. casing; 31a. accommodation cavity; 32. electrode assembly; 321. electrode body; 322. tab; 33. electrode terminal; X. gravitational direction; and Y. first direction.

### DESCRIPTION OF EMBODIMENTS

The implementations of this application are further described in detail below with reference to the drawings and embodiments. The detailed descriptions and drawings of the following embodiments are used to exemplarily illustrate the principles of this application but are not intended to limit the scope of this application, that is, this application is not limited to the described embodiments.

In the descriptions of this application, it should be noted that, unless otherwise specified, "a plurality" means two or more; the terms "upper," "lower," "left," "right," "inner," "outer," and the like indicating orientation or positional relationships are used only for the convenience of describing this application and simplifying the description, and do not indicate or imply that the referenced apparatuses or components must have a specific orientation, or be constructed, or be operated in a specific orientation, and therefore should not be construed as limitations to this application. Additionally, the terms "first," "second," and the like are used for descriptive purposes only and should not be construed as indications or implications of relative importance. "Perpendicular" does not mean strictly perpendicular and an acceptable error range is allowed. "Parallel" does not mean strictly parallel and an acceptable error range is allowed.

Reference to an "embodiment" in this application means that a particular feature, structure, or characteristic described with reference to the embodiment may be included in at least one embodiment of this application. The appearance of this phrase in various places in the specification does not necessarily refer to the same embodiment, nor is it an independent or alternative embodiment mutually exclusive with other embodiments. Persons skilled in the art explicitly and implicitly understand that the embodiments described in this application may be combined with other embodiments.

In the description of this application, it should also be noted that, unless otherwise expressly specified and limited, the terms "mount," "connect," and "join" should be understood broadly, for example, may refer to a fixed connection, a detachable connection, or an integral connection; or may refer to a direct connection or an indirect connection through an intermediate medium. For persons of ordinary skill in the art, the specific meanings of the above terms in this application can be understood based on specific circumstances.

The term "a plurality" in this application refers to two or more (including two).

In this application, a battery cell may include a lithium-ion secondary battery cell, a lithium-ion primary battery cell, a lithium-sulfur battery cell, a sodium-lithium-ion battery cell, a sodium-ion battery cell, or a magnesium-ion battery cell. This is not limited in embodiments of this application. The battery cell may be in a cylinder shape, flat shape, rectangular cuboid shape, or the like. This is not limited by the embodiments of this application.

The battery mentioned in the embodiments of this application may include one or more battery cells to provide a single physical module with higher voltage and capacity. When there are multiple battery cells, the multiple battery cells are connected in series, parallel, or a combination thereof through a busbar component.

In some embodiments, the battery may be a battery module; when there are multiple battery cells, the multiple battery cells are arranged and fastened to form a battery module.

In some embodiments, the battery may be a battery pack, where the battery pack includes a box and a battery cell, and the battery cell or battery module is accommodated in the box.

In some embodiments, the energy storage apparatus includes an energy storage container, an energy storage cabinet, and the like.

A battery cell usually includes an electrode assembly. The electrode assembly includes a positive electrode, a negative electrode, and a separator. During charge and discharge of the battery cell, active ions (such as lithium ions) intercalate and deintercalate back and forth between the positive electrode and the negative electrode. The separator is disposed between the positive electrode and the negative electrode, to prevent short circuits between the positive electrode and negative electrode and enable passage of active ions.

In some embodiments, the positive electrode may be a positive electrode plate, where the positive electrode plate may include a positive electrode current collector and a positive electrode active material disposed on at least one surface of the positive electrode current collector.

In some embodiments, the battery cell further includes an electrolyte, where the electrolyte serves to conduct ions between the positive electrode and negative electrode. A type of electrolyte is not specifically limited in this application and may be selected based on requirements. The electrolyte may be in a liquid, gel, or solid state.

In some embodiments, the electrode assembly is a wound structure. The positive electrode plate and the negative electrode plate are wound into a wound structure.

In some embodiments, the electrode assembly is a laminated structure.

The positive electrode plate and the negative electrode plate may each be provided in plurality, with the multiple positive electrode plates and multiple negative electrode plates alternately stacked.

In some embodiments, a shape of the electrode assembly may be cylindrical, flat, or prismatic, or the like.

The battery cell further includes a casing, where an accommodation cavity for accommodating the electrode assembly is formed inside the casing. The casing can protect the electrode assembly from the outside, preventing external foreign objects from affecting the charge or discharge of the electrode assembly.

In the related art, an energy storage apparatus typically operates outdoors, and a battery compartment of the energy storage apparatus is usually arranged at a top of the energy storage apparatus. As a result, under direct sunlight, a battery in the battery compartment near the top of the battery compartment is exposed to more solar radiation, leading to a higher temperature rise in the battery at the top of the battery compartment. This results in poor temperature uniformity among batteries in the battery compartment, significantly affecting reliability of the energy storage apparatus.

In view of this, the embodiments of this application propose a new technical solution. The technical solution described in embodiments of this application is applicable to an energy storage apparatus and an energy storage system using the energy storage apparatus.

The energy storage system may be an energy storage power station, a wind power generation system, a solar power generation system, a mobile power system, a temporary power supply system, or the like. An energy storage power station can store electrical energy during periods of low electricity demand and provide electrical energy to relevant users or electrical equipment during peak demand. In a wind power generation system, the wind energy collected by the wind turbine is converted into electrical energy and stored by the energy storage apparatus. A solar power generation system can convert solar energy into electrical energy, which is then stored by the energy storage apparatus and supplied to users as needed. A mobile power system can provide power to relevant electrical equipment in areas where the grid power system cannot reach, such as remote mountainous regions or isolated wilderness areas. A temporary power supply system can provide power to users in situations where the power supply is insufficient. The energy storage system provided by the embodiments of this application may be any power system requiring an energy storage apparatus.

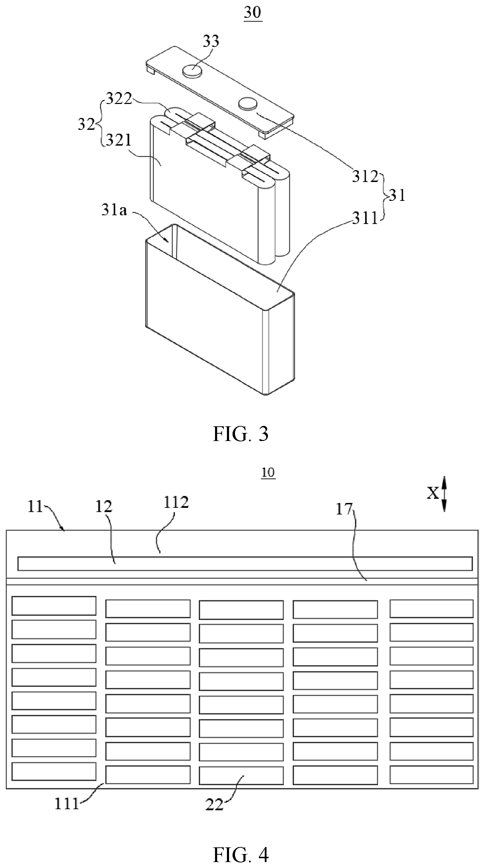

As shown in FIG. 3, a battery cell 30 described in the embodiments of this application includes an electrode assembly 32 and a casing 31, where the casing 31 has an accommodation cavity 31a, and the electrode assembly 32 is accommodated in the accommodation cavity 31a.

The casing 31 includes a shell 311 and an end cap 312. When assembling the battery cell 30, the electrode assembly 32 may first be placed into the accommodation cavity 31a, the end cap 312 may then be fitted on the shell 311, and the electrolyte may be injected into the accommodation cavity 31a through an electrolyte injection port on the end cap 312.

In some embodiments, the casing 31 may also be used to accommodate an electrolyte, such as an electrolyte. The casing 31 may take various structural forms.

The casing 31 may have various shapes, such as a cylinder or a rectangular cuboid. The shape of the casing 31 may be determined based on a specific shape of the electrode assembly 32. For example, if the electrode assembly 32 is a cylindrical structure, the casing 31 may be a cylindrical structure. If the electrode assembly 32 is a rectangular cuboid structure, the casing 31 may be a rectangular cuboid structure. In FIG. 4, for example, both the casing and the electrode assembly 32 are rectangular cuboid structures.

The casing 31 may be made of various materials, such as copper, iron, aluminum, stainless steel, or aluminum alloy. This is not particularly limited in the embodiments of this application.

One or more electrode assemblies 32 may be accommodated in the casing 31. In FIG. 4, there are two electrode assemblies 32 accommodated in the casing 31.

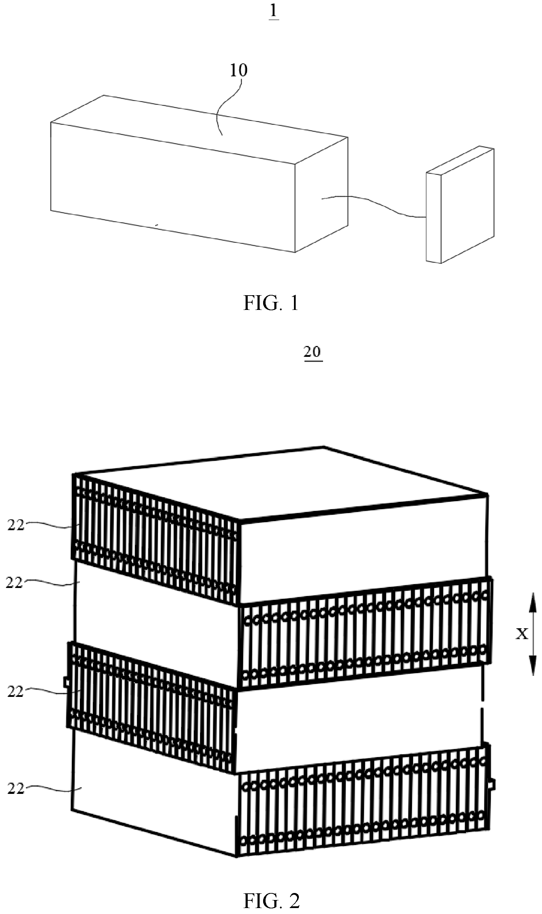

As shown in FIG. 1 to FIG. 4, the energy storage apparatus 10 provided in an embodiment of this application includes a box 11 and a battery 22, where the box 11 includes a battery compartment 111 and a functional compartment 112, and at least a portion of the functional compartment 112 is located above the battery compartment 111 along a gravitational direction X. The battery 22 is accommodated in the battery compartment 111.

The box 11 includes the battery compartment 111 and the functional compartment 112, where the battery 22 is accommodated in the battery compartment 111, and the functional compartment 112 may be used to accommodate functional components other than the battery 22 of the energy storage apparatus 10, such as at least one of a high-voltage connector, a primary control box, a general control box, a fire safety component, a fluid supply component 18, and a high-voltage connector 12. The functional compartment 112 may be a single compartment, with different functional components integrated in one compartment; or the functional compartment 112 may include multiple independent sub-compartments, with different functional components accommodated in different sub-compartments.

At least a portion of the functional compartment 112 is located above the battery compartment 111 along the gravitational direction X, meaning that the entire functional compartment 112 may be located above the battery compartment 111 along the gravitational direction X, or a portion of the functional compartment 112 may be located above the battery compartment 111 along the gravitational direction X, while other portions of the functional compartment 112 may be located on a side of or below the battery compartment 111.

At least a portion of the functional compartment 112 being located above the battery compartment 111 along the gravitational direction X can be understood as the functional components accommodated in the functional compartment 112 partially or completely covering the battery 22 below.

With at least a portion of the functional compartment 112 located above the battery compartment 111 along the gravitational direction X, at least a portion of the functional compartment 112 may cover the entire battery compartment 111 along the gravitational direction X, or the functional compartment 112 covers a portion of the top of the battery compartment 111.

With at least a portion of the functional component located above the battery 22, the functional component can block part of sunlight from reaching the battery compartment 111, thereby reducing the risk of excessive temperature rise in the battery 22 near the top of the battery compartment 111 due to sunlight exposure. The battery 22 may include a structure of a battery cell 30, a battery module 221, a battery pack, or the like, where the battery module 221 includes a plurality of battery cells 30 connected in series or parallel, and the battery pack includes a plurality of battery cells 30 and a frame structure for accommodating the battery cells 30.

There may be multiple batteries 22 accommodated in the battery compartment 111, and the multiple batteries 22 may be connected in series or parallel. Through the charge or discharge of the batteries 22, the energy storage and release processes of the energy storage apparatus 10 are achieved.

Since at least a portion of the functional compartment 112 is disposed above the battery compartment 111 along the gravitational direction X, under sunlight, the battery 22 in the battery compartment 111 is not directly exposed to sunlight, helping to alleviate the temperature rise of the battery 22 near the top of the battery compartment 111 along the gravitational direction X, thereby making the temperatures of the batteries 22 in different regions of the battery compartment 111 as uniform as possible.

In the energy storage apparatus 10 provided in the embodiment of this application, at least a portion of the functional compartment 112 of the box 11 is located above the battery compartment 111 along the gravitational direction X and at least a portion of the functional component is located above the battery 22. When the energy storage apparatus 10 is exposed to direct sunlight, this configuration helps to alleviate the temperature rise of the battery 22 near the top of the battery compartment 111 along the gravitational direction X, thereby improving the temperature uniformity of the batteries 22 within the battery compartment 111. This is conducive to enhancing the reliability of the energy storage apparatus 10. Additionally, due to the alleviated temperature rise of the battery 22 at the top of the battery compartment 111, a service life of the battery 22 near the top of the battery compartment 111 is prolonged, thereby helping to prolong a service life of the energy storage apparatus 10.

As shown in FIG. 4, in some embodiments, at least a portion of the functional compartment 112 covers the battery compartment 111 along the gravitational direction X.

Optionally, the entire functional compartment 112 may be configured to cover the battery compartment 111, or a portion of the functional compartment 112 may be configured to cover the battery compartment 111.

At least a portion of the functional compartment 112 covers the battery compartment 111 along the gravitational direction X, the battery compartment 111 is entirely covered by the functional compartment 112 along the gravitational direction. When the energy storage apparatus 10 is exposed to direct sunlight, this further helps to alleviate the temperature rise of the battery 22 near the top of the battery compartment 111 along the gravitational direction X, thereby further improving the temperature uniformity of the batteries 22 and reliability of the energy storage apparatus 10 and helping to further prolong the service life of the energy storage apparatus 10.

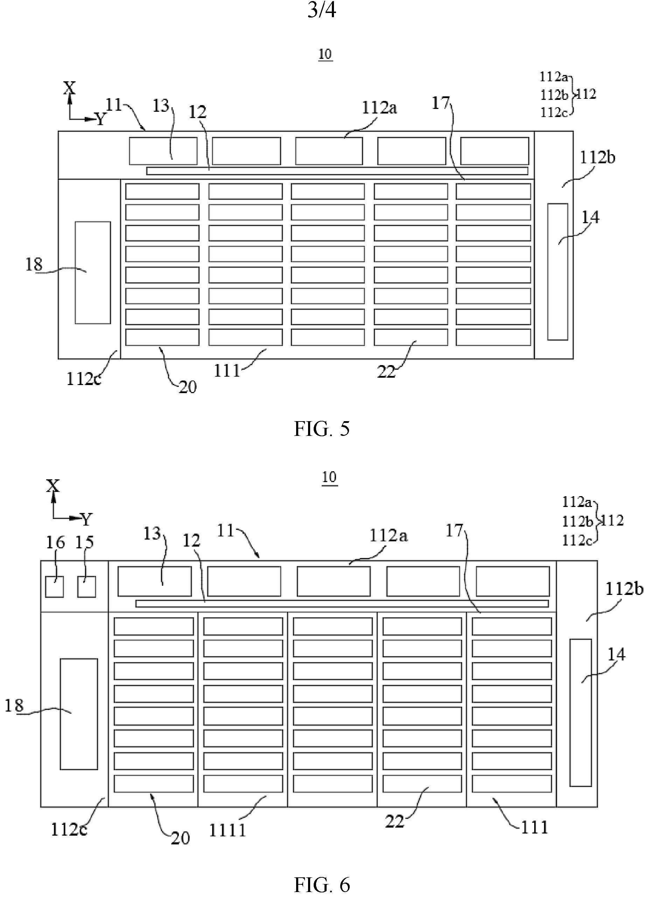

As shown in FIG. 5, in some embodiments, the functional component includes a high-voltage connector 12. The high-voltage connector 12 is electrically connected to the battery 22. The functional compartment 112 includes a first electrical compartment 112a. The first electrical compartment 112a is located above the battery compartment 111 along the gravitational direction X. The high-voltage connector 12 is accommodated in the first electrical compartment 112a.

The high-voltage connector 12 may include components such as a wiring harness or a high-voltage busbar. The high-voltage connector 12 is electrically connected to the battery 22 to achieve series or parallel connection of the batteries 22 or to detect operational information such as a current or voltage of the battery 22, thereby obtaining an operational status of the battery 22 and enabling the normal operation of the energy storage apparatus 10.

With the high-voltage connector 12 disposed in the first electrical compartment 112a, optionally, only the first electrical compartment 112a may be disposed in the first electrical compartment 112a, or other components may also be disposed in the first electrical compartment 112a. This depends on actual needs.

Disposing the high-voltage connector 12 in the first electrical compartment 112a and positioning the first electrical compartment 112a above the battery compartment 111 facilitate the connection between the high-voltage connector 12 and the batteries 22 in the battery compartment 111. This is conducive to simplifying connection circuitry of the battery 22.

Refer to FIG. 5. In some embodiments, the functional compartment includes the first electrical compartment 112a. The first electrical compartment 112a is located above the battery compartment 111 along the gravitational direction X, and the functional component includes a primary control component 13. The primary control component 13 is electrically connected to the battery 22 and located in the first electrical compartment 112a.

The primary control component 13 is electrically connected to the battery 22, and the primary control component 13 may be electrically connected to the battery 22 through a wire or the like to obtain operational parameters such as voltage, current, and temperature of the battery 22 during operation. It may also transmit low-voltage electrical signals to the battery cell 30 to control operations such as disconnection of the battery 22 at appropriate time, thereby improving safety of the battery 22.

Optionally, multiple primary control components 13 may be disposed in the first electrical compartment 112a, with one primary control component 13 controlling one battery 22, or one primary control component 13 controlling multiple batteries 22 connected in series or parallel. For example, one primary control component 13 is electrically connected to one battery cluster 20, where one battery cluster 20 includes multiple batteries 22 connected in series or parallel along the gravitational direction X.

The primary control component 13 may also be electrically connected to the high-voltage connector 12 to transmit relevant voltage or current information to the primary control component 13 through the high-voltage connector 12.

By providing the primary control component 13 and electrically connecting the primary control component 13 to the battery 22, the primary control component 13 can control the acquisition of operational parameters such as current, voltage, and temperature of the battery 22, and the primary control component 13 can send a control signal to the battery 22. The primary control component 13 is disposed above the battery 22, helping to simplify a wiring harness between the battery 22 and the primary control component 13, thus facilitating simplification of the connection between the battery 22 and the primary control component 13.

Refer to FIG. 5. In some embodiments, the energy storage apparatus 10 includes a plurality of primary control components 13 and a plurality of battery clusters 20, each battery cluster 20 includes a plurality of electrically connected batteries 22 arranged along the gravitational direction X, and the primary control components 13 are electrically connected to the battery clusters 20 in a one-to-one correspondence.

With the battery cluster 20 including multiple electrically connected batteries 22, the multiple batteries 22 of the battery cluster 20 may be connected in series or parallel, and the multiple batteries 22 may be arranged in a column along the gravitational direction X to facilitate the electrical connection between the primary control component 13 and the battery cluster 20.

With the primary control components 13 electrically connected to the battery clusters 20 in a one-to-one correspondence, one primary control component 13 controls one battery cluster 20. Under a condition that an operational parameter of one battery cluster 20 is abnormal, the corresponding primary control component 13 controls the corresponding battery cluster 20 to disconnect, without affecting the normal operation of another battery cluster 20.

Therefore, configuring the primary control components 13 to be electrically connected to the battery clusters 20 in a one-to-one correspondence helps to control a corresponding battery cluster 20 through the primary control component 13 and enables separate control of the batteries 22. During abnormal operation of some batteries 22, only the corresponding battery cluster 20 needs to be controlled to stop operation, without affecting the normal operation of another battery cluster 20. This helps to further improve the reliability and prolong the service life of the energy storage apparatus 10.

As shown in FIG. 5, optionally, the functional component further includes a general control component 14. The general control component 14 is electrically connected to the primary control component 13 to transmit electrical signals, where the general control component 14 is accommodated in the functional compartment 112.

The general control component 14 is electrically connected to the primary control component 13, and therefore the primary control component 13 may transmit the obtained electrical signals representing operational parameters such as current, voltage, or temperature of the battery 22 to the general control component 14. Based on the electrical signals transmitted from the primary control component 13, the general control component 14 determines whether to perform operations such as disconnection on the battery 22 and transmits corresponding control signals to the general control component 14. The general control component 14 transmits the control signal to a corresponding execution component.

The general control component 14 is accommodated in the functional compartment 112, and therefore the general control component 14 may be accommodated in the first electrical compartment 112a, or the general control component 14 may be accommodated in another compartment of the functional compartment 112 other than the first electrical compartment 112a.

By configuring the energy storage apparatus 10 to include the general control component 14 and electrically connecting the general control component 14 to the primary control component 13, while ensuring the normal operation of the batteries 22 of the energy storage apparatus 10, potential risks during the operation of the battery 22 can be identified, and corresponding measures can be taken promptly to achieve the normal operation of the energy storage apparatus 10.

As shown in FIG. 5, in some embodiments, the functional compartment 112 further includes a second electrical compartment 112b. The second electrical compartment 112b is disposed on a side of the battery compartment 111 along a first direction Y, where the first direction Y and the gravitational direction X intersect. The functional component further includes a general control component 14, and the general control component 14 is accommodated in the second electrical compartment 112b, where the general control component 14 is configured to be electrically connected to the primary control component 13.

With the second electrical compartment 112b disposed on a side of the battery compartment 111 along the first direction Y, and the first direction Y and the gravitational direction X intersecting, when the battery 22 is exposed to sunlight, for the box 11 of the energy storage apparatus 10, the second electrical compartment can block part of sunlight from reaching the side of the battery compartment 111. This helps to alleviate the temperature rise of the battery 22 near the side of the battery compartment 111, thereby improving the temperature uniformity of the batteries 22, helping to enhance the reliability and service life of the energy storage apparatus 10.

Disposing the general control component 14 on the side of the battery compartment 111 facilitates the electrical connection between the general control component 14 and an external power source or electrical apparatus of the energy storage apparatus 10.

With the primary control component 13 and the high-voltage connector 12 accommodated together in the first electrical compartment 112a and the general control component 14 accommodated in the second electrical compartment 112b, the risk of short circuits between the primary control component 13 and the general control component 14 or between the high-voltage connector 12 and the general control component 14 is reduced, facilitating simplification of the connection circuitry between the primary control component 13 and the battery 22.

Therefore, this configuration facilitates simplification of the connection circuitry between the energy storage apparatus 10 and an external power source or electrical apparatus while improving the reliability and prolonging the service life of the energy storage apparatus 10, helping to simplify the internal connection circuitry of the energy storage apparatus 10.

As shown in FIG. 6, in some embodiments, the energy storage apparatus 10 further includes a humidity regulation unit 15. The humidity regulation unit 15 is configured to control humidity within the first electrical compartment 112a.

Optionally, depending on an operational form of the humidity regulation unit 15, the humidity regulation unit 15 may be disposed within the first electrical compartment 112a, or the humidity regulation unit 15 may be disposed outside the first electrical compartment 112a. Alternatively, a portion of the humidity regulation unit 15 may be located within the first electrical compartment 112a, with another portion located outside the first electrical compartment 112a. For example, the humidity regulation unit 15 may be a dehumidifier.

The humidity regulation unit 15 is configured to control the humidity within the first electrical compartment 112a to maintain the humidity in the first electrical compartment 112a within an appropriate range, helping to reduce the risk of condensation forming in the first electrical compartment 112a. Since the high-voltage connector 12 is disposed in the first electrical compartment 112a, this helps to reduce the risk of condensation dripping onto the high-voltage connector 12, which could cause a short circuit of the high-voltage connector 12 or deteriorate insulation performance of the high-voltage connector 12, thereby helping to improve safety of the energy storage apparatus 10.

In some embodiments, the humidity regulation unit 15 is located on a side of the first electrical compartment 112a along the first direction Y, where the first direction Y and the gravitational direction X intersect. A space where the humidity regulation unit 15 is located is in communication with the functional compartment 112 located above the battery 22.

Thus, the humidity regulation unit 15 may be a dehumidifier; the humidity regulation unit 15 is disposed on a side of the first electrical compartment 112a along the first direction Y; and the space where the humidity regulation unit 15 is located is in communication with the functional compartment 112 above the battery 22. This facilitates the humidity regulation unit 15 in more conveniently extracting water vapor and the like from the first electrical compartment 112a, thus facilitating the humidity regulation unit 15 in controlling the humidity of the functional compartment 112 located above the battery 22.

Refer to FIG. 6. In some embodiments, the energy storage apparatus 10 further includes a temperature regulation unit 16. The temperature regulation unit 16 is configured to control a temperature within the first electrical compartment 112a.

Depending on a structural form of the temperature regulation unit 16, the temperature regulation unit 16 may be disposed within the first electrical compartment 112a, or outside the first electrical compartment 112a. Alternatively, a portion of the temperature regulation unit 16 may be located within the first electrical compartment 112a, with another portion located outside the first electrical compartment 112a.

The temperature regulation unit 16 is provided, so that the temperature within the first electrical compartment 112a is controlled to be within an appropriate range, facilitating better control of the humidity within the first electrical compartment 112a, further reducing the risk of condensation forming in the first electrical compartment 112a, helping to further improve the safety of the energy storage apparatus 10.

In some embodiments, the temperature regulation unit 16 is located on a side of the first electrical compartment 112a along the first direction Y, where the first direction Y and the gravitational direction intersect. A space where the temperature regulation unit 16 is located is in communication with the functional compartment 112 located above the battery 22.

The temperature regulation unit 16 is provided on a side of the first electrical compartment 112a along the first direction Y and in communication with the functional compartment 112 above the battery 22. This facilitates the temperature regulation unit 22 in controlling the temperature of the functional compartment 112 above the battery 22, helping to improve the efficiency of the temperature regulation unit 22 in controlling the temperature of the first electrical compartment 112.

As shown in FIG. 5 and FIG. 6, in some embodiments, the energy storage apparatus 10 further includes a separator 17. The separator 17 is disposed between the battery compartment 111 and the first electrical compartment 112a, where the separator 17 has a first flow channel, and the first flow channel is configured for fluid flow to implement heat exchange with the separator 17.

The separator 17 is provided and the separator 17 is provided with a first flow channel. In this way, the separator 17 can completely separate the first electrical compartment 112a from the battery compartment 111. During the process of fluid flowing through the first flow channel, the separator 17 exchanges heat with the fluid, thereby enabling the separator 17 to simultaneously exchange heat with the first electrical compartment 112a and the battery compartment 111, that is, enabling the separator 17 to simultaneously cool or heat the battery 22 and components such as the high-voltage connector 12 in the first electrical compartment 112a, facilitating the normal operation of the energy storage apparatus 10.

Optionally, the fluid for the separator 17 may be provided by a related structure inside the energy storage apparatus 10 or by a related structure outside the energy storage apparatus 10.

Optionally, the functional compartment 112 may include a fluid supply compartment 112c, and the functional component may further include a fluid supply component 18. The fluid supply component 18 is disposed in the fluid supply compartment 112c to supply fluid to the first flow channel. The fluid supply compartment 112c may be located above the battery compartment 111 along the gravitational direction X, with the fluid supply unit 18 located above the battery 22; alternatively, the fluid supply compartment 112c may be located on a side of the battery compartment 111 along the first direction Y, with the fluid supply unit 18 also located on a side of the battery 22.

Refer to FIG. 5 and FIG. 6. In some embodiments, the functional compartment 112 further includes the fluid supply compartment 112c. The fluid supply compartment 112c is disposed on a side of the battery compartment 111 along the first direction Y, where the first direction Y and the gravitational direction X intersect. The functional component further includes the fluid supply component 18. The fluid supply component 18 is disposed in the fluid supply compartment 112c and in communication with the first flow channel to supply fluid to the first flow channel.

The fluid supply component 18 is in communication with the first flow channel, so that the fluid can circulate between the first flow channel and the fluid supply component 18, ensuring that the fluid flowing into the first flow channel has an appropriate temperature, thereby achieving the purpose of heat exchange between the fluid and the separator 17.

The fluid supply compartment 112c is disposed on a side of the battery compartment 111 along the first direction Y. In this case, optionally, the fluid supply compartment 112c and the second electrical compartment 112b may be respectively located on two sides of the battery compartment 111 along the first direction Y. Thus, the fluid supply compartment 112c and the second electrical compartment 112b are respectively used to block sunlight from directly reaching the battery compartment 111 from two sides along the first direction Y. This helps to further reduce the risk of non-uniform temperatures among the batteries 22 in the battery compartment 111, thereby improving the reliability of the energy storage apparatus 10.

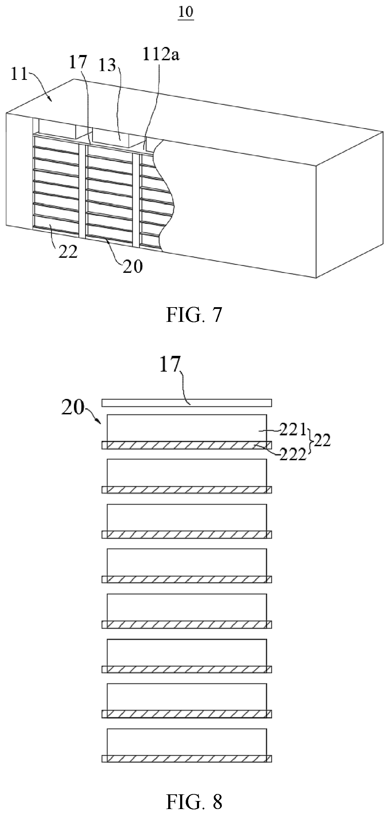

As shown in FIG. 8, in some embodiments, the battery 22 includes a battery module 221 and a heat exchanger 222, where the battery module 221 includes a plurality of electrically connected battery cells 30. The heat exchanger 222 is disposed on a side of the battery module 221 facing away from the separator 17, where the heat exchanger 222 has a second flow channel, where the second flow channel is configured for fluid flow to implement heat exchange with the battery module 221.

The battery module 221 includes a plurality of electrically connected battery cells 30, where the battery cells 30 may be connected in series or parallel to form the battery module 221, and multiple battery modules 221 may be further connected in series or parallel to form a battery cluster 20.

The battery 22 may further include a frame structure, with the heat exchanger 222 accommodated in the frame structure.

The heat exchanger 222 is disposed on the side of the battery module 221 facing away from the separator 17, and then the heat exchanger 222 can perform heat exchange with the plurality of battery cells 30 of the battery module 221 on the side of the battery module 221 facing away from the separator 17, enabling the normal operation of the battery cells 30.

For a battery module 221 with heat exchangers 222 disposed on two sides along the gravitational direction X, the battery module 221 undergoes heat exchange with the heat exchangers 222 on two sides along the gravitational direction X, resulting in a relatively uniform temperature field for the batteries 22 arranged along the gravitational direction X, helping to further improve the temperature uniformity of the batteries 22.

Optionally, when fluid flows through the second flow channel of the heat exchanger 222, the battery module 221 can be cooled to reduce the risk of thermal runaway in the battery cells 30 in the battery module 221 due to excessively high temperature, or the heat exchanger 222 can heat the battery module 221 to enable the normal operation of the battery cells 30. For example, when the energy storage apparatus 10 operates in an extremely cold environment, the heat exchanger 222 can be configured to heat the battery module 221 to reduce the risk that the battery cells 30 fail to operate normally due to a low temperature.

In the case where each battery module 221 has a heat exchanger 222 on the side facing away from the separator 17, since a battery module 221 closest to the separator 17 has a heat exchanger 222 and the separator 17 on two sides along the gravitational direction X, while other battery modules 221 have heat exchangers 222 on two sides along the gravitational direction X, each of the multiple batteries 22 arranged along the gravitational direction X can undergo heat exchange on two sides. This helps to improve the temperature field uniformity of the batteries 22, helping to further prolong the service life of the energy storage apparatus 10.

Optionally, fluid may be supplied to the second flow channel of the heat exchanger 222 by a liquid supply component outside the energy storage apparatus 10, or by a related liquid supply component inside the energy storage apparatus 10. This depends on actual needs.

In some embodiments, the fluid supply component 18 is further in communication with the second flow channel to supply fluid to the second flow channel.

Thus, the fluid supply component 18 provides fluid to both the first flow channel and the second flow channel. This helps to simplify the structure and space utilization of the energy storage apparatus 10.

As shown in FIG. 6 and FIG. 7, in some embodiments, the battery compartment 111 includes a plurality of battery sub-compartments 1111. The plurality of battery sub-compartments 1111 are arranged along a first direction Y, where the first direction and the gravitational direction X intersect. The battery sub-compartments 1111 are configured to accommodate the batteries 22.

The battery compartment 111 includes a plurality of battery sub-compartments 1111, and each battery sub-compartment 1111 can accommodate multiple batteries 22. For example, each battery sub-compartment 1111 accommodates one battery cluster 20, where one battery cluster 20 includes multiple batteries 22 arranged along the gravitational direction X, with the multiple batteries 22 of one battery cluster 20 connected in series or parallel.

In this case, the functional compartment 112 is disposed above the battery compartment 111 along the gravitational direction X, and then the functional compartment 112 is disposed above the battery sub-compartments 1111 along the gravitational direction X. For example, the first electrical compartment 112a of the functional compartment 112 covers each battery sub-compartment 1111 along the gravitational direction X to reduce direct sunlight exposure to the batteries 22 in each battery sub-compartment 1111, thereby improving the temperature uniformity of the batteries 22 in the plurality of battery sub-compartments 1111.

Adjacent battery sub-compartments 1111 may be independent of each other, and the batteries 22 in each battery sub-compartment 1111 may be electrically connected to each other before being electrically connected to the primary control component 13. The battery clusters 20 are arranged in parallel, with the primary control components 13 in a one-to-one correspondence with the battery sub-compartments 1111, that is, one primary control component 13 controls the batteries 22 in one battery sub-compartment 1111. This enables separate control of the batteries 22, such that a disconnection in the batteries 22 of any battery sub-compartment 1111 does not affect the normal operation of the batteries 22 in other battery sub-compartments 1111. Additionally, if thermal runaway or leakage occurs in the batteries 22 of one battery sub-compartment 1111, the adverse impact on the batteries 22 in other battery sub-compartments 1111 can be reduced.

Therefore, configuring the battery compartment 111 to include a plurality of battery sub-compartments 1111 helps to alleviate the adverse impact on other battery sub-compartments 1111 when thermal runaway or disconnection occurs in the batteries 22 of any battery sub-compartment 1111, thereby helping to improve the reliability and prolonging the service life of the energy storage apparatus 10.

The energy storage system 1 provided in the embodiments of this application includes the energy storage apparatus 10 provided in any of the embodiments described above.

The energy storage system 1 may further include a power grid, a charge mechanism, and an electrical apparatus, where the charge mechanism connects the energy storage apparatus 10 and the power grid to charge the energy storage apparatus 10 at appropriate time, such as during a period of low electricity demand or sufficient electrical energy. The electrical apparatus is also electrically connected to the energy storage apparatus 10, so that the energy storage apparatus 10 can provide electrical energy to the relevant electrical apparatus.

With the energy storage apparatus 10 provided in any of the embodiments described above, the energy storage system 1 provided by the embodiments of this application achieves the same technical effects. Details are not repeated herein.

As shown in FIG. 2 to FIG. 8, in some embodiments, the energy storage apparatus 10 provided in the embodiments of this application includes the box 11, the battery 22, the functional component, the humidity regulation unit 15, the separator 17, and the temperature regulation unit 16. The functional component includes the high-voltage connector 12, the primary control component 13, the general control component 14, and the fluid supply component 18. The functional compartment 112 includes the first electrical compartment 112a, the second electrical compartment 112b, and the fluid supply compartment 112c. The first electrical compartment 112a covers the battery compartment 111 along the gravitational direction X, and the second electrical compartment 112b and the fluid supply compartment 112c are respectively located on two sides of the battery compartment 111 along the first direction Y, where the first direction Y and the gravitational direction X intersect. The separator 17 is disposed between the first electrical compartment 112a and the second electrical compartment 112b, where the separator 17 has a first flow channel. The battery compartment 111 includes a plurality of battery sub-compartments 1111. The battery 22 includes a battery module 221 and a heat exchanger 222, where the battery module 221 includes a plurality of electrically connected battery cells 30, and the heat exchanger 222 has a second flow channel disposed on the side of the battery module 221 facing away from the separator 17. Multiple batteries 22 arranged along the gravitational direction X are electrically connected to form a battery cluster 20, where multiple battery clusters 20 are electrically connected to multiple primary control components 13 in a one-to-one correspondence, and the battery clusters 20 are connected to the high-voltage connector 12. The high-voltage connector 12 and the primary control component 13 are disposed in the first electrical compartment 112a, and the general control component 14 is disposed in the second electrical compartment 112b and electrically connected to the primary control component 13. The temperature regulation unit 16 and the humidity regulation unit 15 are respectively configured to control a temperature and humidity within the first electrical compartment 112a. The fluid supply component 18 is disposed in the fluid supply compartment 112c and is in communication with the first flow channel and the second flow channel to supply fluid to the first flow channel and the second flow channel, where the fluid undergoes heat exchange with the separator 17 and the battery 22.

In the energy storage apparatus 10 provided in the embodiments of this application, the first electrical compartment 112a covers the battery compartment 111 along the gravitational direction X and at least a portion of the functional component is located above the battery 22. This helps to reduce direct sunlight exposure to the battery 22 at the top of the battery compartment 111, thereby alleviating the temperature rise of the battery 22 at the top of the battery compartment 111, helping to improve the temperature uniformity of the batteries 22 and enhancing the reliability of the energy storage apparatus 10. Additionally, due to the alleviated temperature rise of the battery 22 at the top of the battery compartment 111, the service life of the battery 22 near the top of the battery compartment 111 is prolonged, thereby helping to prolong the service life of the energy storage apparatus 10.

Although this application is described with reference to preferred embodiments, various improvements can be made thereto, and components therein can be replaced with equivalents without departing from the scope of this application. In particular, as long as there is no structural conflict, the technical features mentioned in the various embodiments can be combined in any manner. This application is not limited to the specific embodiments disclosed herein but includes all technical solutions falling within the scope of the claims.

## Claims

1. An energy storage apparatus, comprising:
a box, comprising a battery compartment and a functional compartment, wherein at least a portion of the functional compartment is located above the battery compartment along a gravitational direction;
a battery, accommodated in the battery compartment; and
a functional component, wherein the functional component is accommodated in the functional compartment and at least partially located above the battery.

2. The energy storage apparatus according to claim 1, wherein the functional component comprises a high-voltage connector, the high-voltage connector is electrically connected to the battery, the functional compartment comprises a first electrical compartment, the first electrical compartment is located above the battery compartment along the gravitational direction, and the high-voltage connector is accommodated in the first electrical compartment.

3. The energy storage apparatus according to claim 1 or 2, wherein the functional compartment comprises the first electrical compartment, the first electrical compartment is located above the battery compartment along the gravitational direction, the functional component comprises a primary control component, and the primary control component is electrically connected to the battery and located in the first electrical compartment.

4. The energy storage apparatus according to claim 3, wherein the energy storage apparatus comprises a plurality of primary control components and a plurality of battery clusters, each battery cluster comprises a plurality of electrically connected batteries arranged along the gravitational direction, and the primary control components are electrically connected to the battery clusters in a one-to-one correspondence.

5. The energy storage apparatus according to claim 3 or 4, wherein the functional compartment further comprises a second electrical compartment, the second electrical compartment is disposed on a side of the battery compartment along a first direction, the first direction and the gravitational direction intersect, the functional component further comprises a general control component, the general control component is accommodated in the second electrical compartment, and the general control component is configured to electrically connect to the primary control component.

6. The energy storage apparatus according to any one of claims 2 to 5, wherein the energy storage apparatus further comprises a humidity regulation unit, wherein the humidity regulation unit is configured to control humidity within the first electrical compartment.

7. The energy storage apparatus according to claim 6, wherein the humidity regulation unit is located on a side of the first electrical compartment along the first direction, the first direction and the gravitational direction intersect, and a space wherein the humidity regulation unit is located is in communication with the functional compartment located above the battery.

8. The energy storage apparatus according to any one of claims 2 to 7, wherein the energy storage apparatus further comprises a temperature regulation unit, and the temperature regulation unit is configured to control a temperature within the first electrical compartment.

9. The energy storage apparatus according to claim 8, wherein the temperature regulation unit is located on the side of the first electrical compartment along the first direction, the first direction and the gravitational direction intersect, and a space wherein the temperature regulation unit is located is in communication with the functional compartment located above the battery.

10. The energy storage apparatus according to any one of claims 2 to 9, wherein the energy storage apparatus further comprises a separator, the separator is disposed between the battery compartment and the first electrical compartment, the separator has a first flow channel, and the first flow channel is configured for fluid flow to implement heat exchange with the separator.

11. The energy storage apparatus according to claim 10, wherein the functional compartment further comprises a fluid supply compartment, the fluid supply compartment is disposed on a side of the battery compartment along the first direction, the first direction and the gravitational direction intersect, the functional component further comprises a fluid supply component, and the fluid supply component is disposed in the fluid supply compartment and is in communication with the first flow channel to supply fluid to the first flow channel.

12. The energy storage apparatus according to claim 11, wherein the battery comprises:
a battery module, comprising a plurality of electrically connected battery cells; and
a heat exchanger, disposed on a side of the battery module facing away from the separator, wherein the heat exchanger has a second flow channel, and the second flow channel is configured for fluid flow to implement heat exchange with the battery module.

13. The energy storage apparatus according to claim 12, wherein the fluid supply component is further in communication with the second flow channel to supply fluid to the second flow channel.

14. An energy storage system, comprising the energy storage apparatus according to any one of claims 1 to 13.
